# EUROPEAN PATENT APPLICATION

(11) **EP 1 916 522 A1**
(43) Date of publication of application: **30.04.2008**
(21) Application number: 06122913.4
(22) Date of filing: 25.10.2006
(51) Int. Cl.: G01N 30/60

(54) **Column having separated sections of stationary phase**

(71) Applicant: Agilent Technologies, Inc., Santa Clara, CA 95051 (US)
(72) Inventor: Witt, Klaus, 75210 Keltern (DE); Hoffmann, Bernd-Walter, 76228 Karlsruhe (DE)
(74) Representative: Barth, Daniel Mathias

(57) **Abstract**

A column device (50) comprises a stationary phase (100) having a plurality of particles (110) adapted for interacting with a mobile phase (20) in order to separate different compounds of a sample fluid dissolved in the mobile phase (20), a housing (160) for at least partly housing (160) the stationary phase (100), and a separator (200) separating sections of the stationary phase (100) and being force-coupled with the housing (160).

## Description

### BACKGROUND ART

The present invention relates to column devices for separating different compounds of a mobile phase.

In high performance liquid chromatography (HPLC), a mobile phase (usually an analyte which may comprise a sample fluid to be analyzed) may be pumped through a column comprising - as a stationary phase - a material capable of separating different compounds that are dissolved in the mobile phase. Such material, e.g. so called beads which may comprise silica gel, may form a packed bed when filled into an empty tube. After being filled, the so-called HPLC column may be coupled or connected to other elements (like a control unit, a pump, containers including samples to be analyzed) by e.g. using fitting elements. Such fitting elements may contain porous parts such as screens or frit elements.

During operation, a flow of the mobile phase traverses the column filled with the stationary phase, and due to the physical interaction between the mobile and the stationary phase a separation of different compounds or components may be achieved. In case the mobile phase contains a sample fluid, the separation characteristics is usually adapted in order to separate compounds of such sample fluid. The term compound, as used herein, shall cover compounds which might comprise one or more different components. The stationary phase is subject to a mechanical force generated in particular by a hydraulic pump that pumps the mobile phase usually from an upstream connection of the column to a downstream connection of the column. As a result of flow, depending on the physical properties of the stationary phase and the mobile phase, a relatively high pressure occurs across the column.

US 5,908,552 A and US 5,858,241 A both disclose columns for capillary chromatographic separations. Other columns are disclosed e.g. in US 5,651,886, US 5,071,610 and US 5,338,448, WO 2006/000469 or by the unpublished patent applications WO/EP2006/060645 and EP 05110782.9, both by the same applicant Agilent Technologies.

### DISCLOSURE

It is an object of the invention to provide an improved column device. The object is solved by the independent claim(s). Further embodiments are shown by the dependent claim(s).

In one embodiment, the column or column device has a stationary phase comprising a plurality of particles. The particles may interact with the mobile phase in order to separate different compounds, dissolved in the mobile phase. A housing is provided for at least partly housing the stationary phase. Such housing may be a tube, several tubes, or other components or devices (in any suitable shape) combined allowing to receive, contain and retain the stationary phase, but also to withhold the pressure requirements resulting from driving the mobile phase through the column. With smaller sizes of the stationary phase particles, pressures of about 1000 bar and above might be used in order to gain analysis speed and resolution.

The stationary phase is separated into two or more sections of stationary phase(s), whereby a separator is provided between two neighboring sections of stationary phase. Each separator is force-coupling with the housing, or in case the stationary phase is housed by plural individual housing elements, each separator is force-coupled to or with at least one of such housing elements. Such separator (or each separator in case of plural separators) allows that a force - in this case e.g. a mechanical force -, which may result from the mobile phase passing through a section of the stationary phase which is located upstream neighboring to the separator, can be at least partly transmitted by means of the separator to the housing (or housing element) to which the separator is force-coupled. Thus, force from the stationary phase section neighboring upstream to the separator is at least reduced (and ideally even eliminated), and correspondingly at least partly reduced before subjected onto the stationary phase section neighboring downstream to the separator.

In other words, a force exerting on a particle of the stationary phase abutting from upstream onto the separator is at least partly transmitted through the separator and thus exerted onto the housing, so that only a reduced force - or in best case no force - from this (upstream) particle is subjected on a particle located downstream from the separator. Without such separator, a force between neighboring abutting particles is directly exerted from the upstream particle to the downstream particles, thereby distributed and accumulating in the direction of flow of the mobile phase. It is clear that a full accumulation of forces only applies in case the force vector is maintained in the same direction, however, the principle of force accumulation in downstream direction nevertheless still applies.

The force as "seen" by each particle of the stationary phase results from the rate of flow of the mobile phase passing this particle as well as from particles abutting from upstream. Using the simplified model with all force vectors in the same direction, the force in downstream direction is accumulated with each particle abutting further downstream. The separator located between two such particles in downstream direction virtually "interrupts" such chain of force accumulation, so that only a limited force is exerted on the downstream particle, and ideally the force is fully transmitted and exerted onto the housing.

The effect and result from excessive application of force onto particles of the stationary phase may damage the particles or at least a certain percentage of particles. Elastic particles might collapse entirely or in parts. Brittle particles might break and crumble into fines and particle fragments. Depending on the pore size of the bead retaining parts, occurring fines may pass such parts and may be flushed out of the column. Furthermore occurring fragments may cause the packed bed to be reestablished into a suboptimal non-uniform particle bed structure. The structure of the packed bed may be impaired. Thus, the volume of the stationary phase may be reduced, e.g. creating channels within the column packing or creating a void volume in particular at an inlet side (upstream) of the column device. Void volumes, however, are generally undesirable and might lead to increased dispersion of the compounds to be separated, thus decreasing the resolution of the separation process. Further or in addition, smaller sized particles (resulting from particle damaging) may partially stick between other pores, inside a filter or frit pores at the outlet of the column (leading to an increase in the pressure drop across the column), or that such smaller size particles can pass through the outlet of the column, eventually disturbing downstream devices or processes.

By reducing the force exerted on the stationary phase particles, the danger of damaging such particles in effect of such force becomes reduced (or even be eliminated) and might limit overstress.

In one embodiment, the stationary phase is located between an inlet and outlet of the column device. In order to retain the particles within the column device a filter may be provided adapted for preventing the particles from passing through the filter. Such filter is preferably located at the outlet of the column but might also be located at the inlet or at both sides. Such filter might be or comprise porous parts such as screens or frit elements, a frit, or any other suitable device or element as known in the art and in particular as disclosed by the documents cited in the introductory part. Such filter might have a pore structure allowing fluids to pass through, usually with a maximum pore size smaller than the column particles, so that the column particles remain retained inside the column.

In one embodiment the separator might even be embodied in the same way as the filter, e.g. a frit, thus allowing using the same parts in multiple places.

The stationary phase is divided by the one or more separators into different sections. Each section comprises a plurality of particles which may be individual particles and/or particles bound together, e.g. as known in the art such as by temperature treatment, chemical reaction, gluing, etc. The particles are preferably packed together by application of pressure and/or force.

In one embodiment, at least one section of the stationary phase comprises particles which are different from particles in another section. Thus, different separation characteristics can be achieved along the separation path of the column.

The separator is at least partly permeable for the mobile phase, thus allowing the mobile phase to pass through the column. While the separator might be embodied from particles of the stationary phase, it might also or in addition comprise separate elements such as a filter, a frit, a screen, a membrane, a combination of the above or any other element as known in the art. For coupling together particles or particles with other elements, force-coupling (i.e. by applying adequate pressure during the manufacturing process of the column device, such as using an appropriate liquid with or without ultrasonic support, a mixture of different liquids, a supercritical fluid), a chemical reaction, e.g. with a magnitude of polymerization processes, temperature processing such as heating as disclosed in the aforementioned US 5,858,241, gluing (e.g. as disclosed in the afore mentioned unpublished EP05110782.9), or any other suitable process might be used.

In one embodiment, the separator is provided to be at least partly elastically deformable (e.g. on application of force). This might result from the physical characteristic of the separator and/or the specific applied way of coupling the separator to the housing. For example the separator might be bendable in flow direction as result from an application of force. The separator might be embodied elastically deformable as disclosed in the aforementioned unpublished WO/EP2006/060645.

In one embodiment, an inner surface of the housing facing the stationary phase, the separator, or both is provided with an area of a defined surface roughness. This can support or achieve the force coupling between the separator and the housing.

The force coupling between the separator and the housing might be achieved by form fitting and/or force fitting. In one embodiment, the housing comprises a section of reduced or increased diameter, so that the separator is kept in position by form fitting.

While the separator can be provided by an element separate/different from the housing, the separator might also be formed as an integral part of the housing. E.g. in case of an application in a micro-fluidic device, one or more separators might be provided as integral parts of the general walls. In one embodiment, wherein the column comprises one separator, the column is packed sequentially from both directions.

The particles of the stationary phase might be embodied as porous and/or non-porous particles, as well known in the art. Typical materials suitable for the stationary phase can be inorganic metal- or non metal oxides such as pure Silica or any chemical modifications of Silica, oxides of Zirconia, Titania, Alumina, graphitized carbon or organic polymers such as Polystyrene, polyvinyl alcohols, metacrylates or any other derivatives.

Embodiments of the invention have also been shown advantageous when going to smaller sizes of the particles. For smaller particles, the individual interstitial volumes between discrete particles is lower, which increases the linear velocity of the flow around the particles, resulting in higher pressure drop across unit length of the column. Accordingly, the number of particles per volume increases with lower particle sizes. Thus for operating a smaller particle column the system pressure is increased. For porous particles of smaller size, a relatively lower amount of the mobile phase passes along outside each particle. As a result the percentage of liquid flowing through a porous particle increases, increasing the force acting on that particle, which again leads to more force per unit length of the separation column being accumulated.

The column device is preferably applied in the so-called high performance liquid chromatography (HPLC) with pressure ranges of (currently) a few bar and up to 1000 bar (and even beyond) being exerted on the column in order to move the samples to be separated and measured with support of the mobile phase through the separation device. The invention has been shown in particular useful with high speed applications. These applications use high flow rates of the mobile phase to dramatically reduce the separation time and very small particles to create more separation efficiency. Both dramatically increase the overall pressure drop across the column, often close to the system's pressure specification limits.

Embodiments of the column device can be used in a separation device or system which might comprise further units such as one or more pumps for driving the mobile phase, one or more sampling units for introducing sample(s) into the mobile phase, one or more thermostats for temperature control, one or more detectors for detecting separated compounds, and one or more fractionating units for the collection of separated compounds. Such separation system might also or in addition comprise any other unit as known in the art and in particular such as disclosed in the aforementioned prior art documents.

In one embodiment, the column device comprises a plurality of inner tubes. Each inner tube is housing a section of the stationary phase. A separator is provided between two inner tubes. The inner housing together with the one or more separators are then housed by the housing. In this embodiment, the one or more separators might be force coupled either directly with the housing or by means of the inner tubes, with at least one of the inner housing being force-coupled with the housing.

In one embodiment, the inner housings as well as the housing are embodied as tubes. The inner housings are placed into the housing tube, with two neighboring inner housing tubes locating one separator.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Figure 1 shows an example of a separation system 10 for separating compounds dissolved in a mobile phase 20.

Figure 2A shows a typical embodiment of a column 50. Figure 2B illustrates the occurrence of a force onto the particles 110.

Figure 3 illustrates the effect resulting from the introduction of the separator 200.

Figures 4A-4C and Figures 5A-5B show embodiments of the separator 200.

Figure 6 shows an embodiment of the column 50 provided as a microfluidic application.

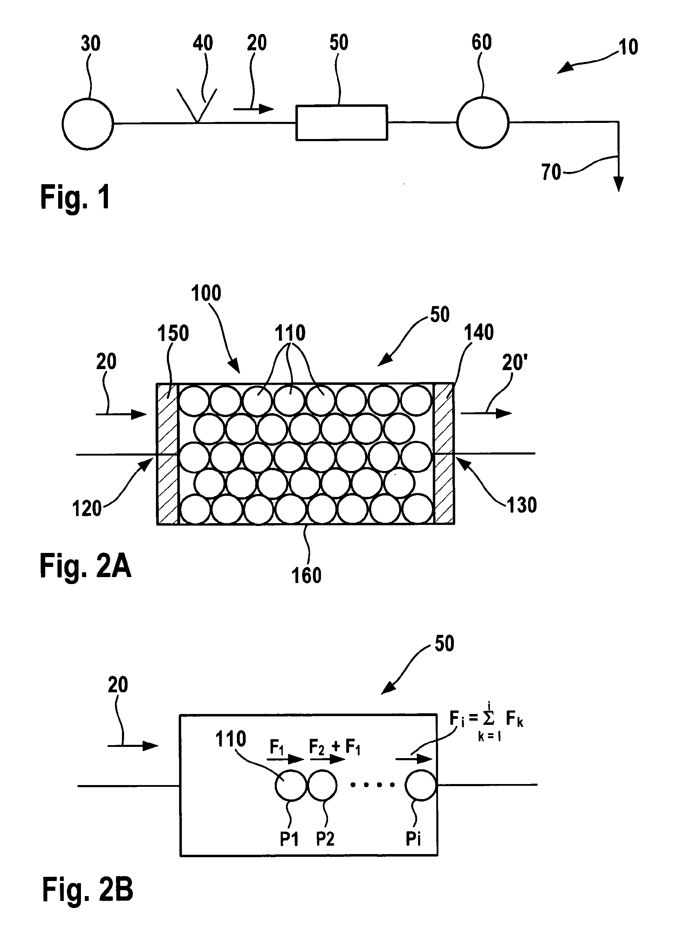

In Figure 1, the separation system 10 might comprise a driving unit 30 for driving the mobile phase 20. Such driving unit 30 can be a pump such as disclosed in EP 0309596 A or any other suitable HPLC pump as known in the art. A sampling unit 40 might be provided for introducing a sample to be analyzed into the mobile phase 20. A column 50 is located downstream to the driving unit 30 and the sampling unit 40. The column device 50 is adapted for separating different compounds of the sample as introduced by the sampling unit 40. The column 50 will be described in greater detail below.

A detector 60 can be coupled downstream to the column 50 in order to detect the separated compounds. Such detection might be optically, electrically or by any other means as known in the art. Typical types of detection devices as applied in HPLC are UV- or UV/Visible absorbance detection devices, Fluorescence or Light scattering detection devices, Refractive index detectors or any other light transmission/emission based detectors, conductivity or electro-chemical detectors, or chemical mass based detection devices, such as a mass spectrometer and/or a combination of these detection devices.

A fractionating unit 70 can be provided for collecting separated analytes of injected sample(s) to be analyzed.

The separation system 10 can be embodied as a whole by or in parts by using components of the Agilent 1100 Series or the Agilent 1200 Series as provided by the applicant Agilent Technologies and disclosed under www.agilent.com.

Figure 2A shows a typical embodiment of a column 50 having a stationary phase 100 with a plurality of particles 110. In Figure 2A, only three of the particles are denoted with reference sign 110, but it is to be understood that all of the globes located in the column 50 shall be particles 110. The column 50 further comprises an inlet 120 for receiving the mobile phase 20 and an outlet 130 for outletting the mobile phase, which shall be denoted as 20'. A filter 140 is usually provided at the outlet 130 in order to retain the particles 110 from leaving the column 50. In addition the same or another filter 150 might be provided at the inlet 120, again for retaining the particles 110 within the column 50. The stationary phase 100 is housed in a housing 160, which might be provided by one or more pieces.

Figure 2B illustrates the occurrence of a (mechanical) force onto the particles 110 as a result of the resistance of the stationary phase and the viscosity of the mobile phase 20 flowing through the column 50. A first particle P1 experiences a force F1 from the flow of the mobile phase 20. A particle P2, which is located further downstream of the mobile phase 20 and to which the particle P1 abuts to, is also subjected to a force F2 resulting from the flow of the mobile phase 20 but is also subjected to the force F1 from the particle P1 abutting to the particle P2. Each further particle Pi located further downstream is subjected not only to the force Fi from the flow of the mobile phase 20, but also to the accumulated force from the particles located further upstream and abutting to each other.

It is clear that the force model in Figure 2B is a simplified model with the forces depicted only in one direction for the sake of simplicity. It goes without saying that each force vector might be distributed into components in different directions, thus reducing the accumulated force in one direction (as depicted in Figure 2B). However, the principle still applies and it becomes apparent from the simplified model of Figure 2B that the particles located further downstream or subjected to an accumulated force from particles located further upstream as a result from the flow of the mobile phase 20 through the stationary phase 100.

During the loading process of any separation device 50, the particles are usually packed as closely together as possible to perform a high separation HPLC column. In such case, the force F or Fi onto any particle will be greater than zero, even, if the force might be reduced in case of a deformation of any of the particles 110, in particular in case of plastic deformation.

In case the accumulated force Fi exceeds a certain limit, which might differ from particle to particle and also depend on the physical characteristics of the particles 110, the particle Pi can be permanently deformed or even damaged. For example, the particle can collapse (e.g. in case of elastic particles) or break into sub-particles e.g. in case of more brittle particles. This can lead e.g. to bed channeling and/or a void volume in particular in the region of the inlet 120, which then will cause a peak dispersion (of chromatographic peaks) and chromatographic band-spreading that reduces the resolution between two neighbored analytes when passing detector 60. As a result any well separated pure analytes might not be purely separated, identified and quantified any more. Further, the smaller sized sub-particles might pass through, or plug, block or clog the filter 140, at least partly, which again can lead to a higher pressure drop across the column 50, and finally might reduce the separation performance of column 50.

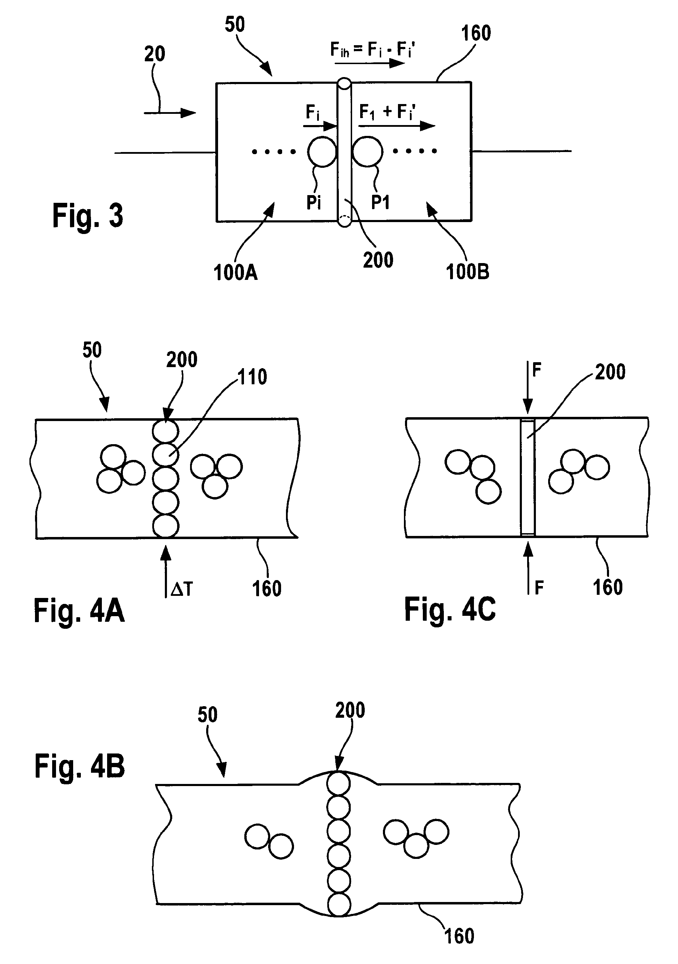

Figure 3 illustrates the effect resulting from the introduction of the separator 200, which is force coupled with the housing 160. Particle Pi which abuts from upstream to the separator 200 exerts the accumulated force Fi onto the separator 200 (rather than onto a neighboring particle as illustrated in Figure 2B). Dependent on the degree of force coupling between the separator 200 and the housing 160, a portion Fih of the force Fi is transmitted to the housing 160 and "absorbed" by the housing 160, and only a remaining portion Fi' is exerted from the separator 200 onto a particle P1 abutting downstream to the separator 200. In case of an ideal force coupling between the separator 200 and the housing 160 and no elastic deformation of the separator 200, the remaining portion Fi' is zero, so that the particle P1 only experiences the force F1 resulting from the flow of the mobile phase 20. In other words, the separator 200 reduces the amount of the accumulated force Fi from particles located upstream and ideally eliminates such accumulated force.

Figure 4A shows an embodiment of the separator 200 being formed e.g. in-situ from particles 110. As result from an application of increased temperature ΔT, the particles 110 are force-coupled together and also force-coupled with the housing 160, thus providing the separator 200. This can be provided as disclosed in the aforementioned US 5,858,241, the teaching thereof (in particular with respect to the immobilization by thermal treatment) shall be incorporated herein by reference. Alternatively or in addition, the particles 110 might be coupled together and/or to the housing 160 by providing a chemical reaction between the inner surface of the housing 160 and the beads or a mixture of the beads with a second component. A typical example might be a modified sol gel process as known in the art (see e.g. Kato et al., J. Sep. Sci. 2005, 28, 1893-1908) or by providing a gluing process. In this case a monomer of an organic compound might be mixed together with the separator forming particles. UV light might be excited onto the monomer starting a polymerization process, while the particles are embedded together during this process and attached to the housing 160.

Figure 4B shows another embodiment, wherein the separator 200 is provided by particles 110, e.g. as illustrated with respect to Figure 4A. In this embodiment, the force coupling between the separator 200 and the housing 160 is provided by a variation in the diameter of the housing 160, which might be embodied as a tube. In the example of Figure 4B, the diameter of the housing 160 is increased in the region of the location of the separator 200. Alternatively (but not shown in the figures), the diameter in the region downstream of the separator can be reduced. In either way the separator 200 is detained from moving in downstream direction.

While the principle of diameter variation for detaining the separator 200 is illustrated in Figure 4B for a separator 200 provided from particle 110, it is clear that the same principle can also be applied with other types, shapes, and embodiments of the separator 200. The teaching of the aforementioned US 5,908,552, in particular with respect to the application of such diameter variation to detain filter or frit elements, shall be incorporated herein by reference. However, while US 5,908,552 only teaches to provide such detained frit regions for end frits at the outlet and/or inlet of the column, such filter or frit element can be used according to the embodiments of the present invention as the separator 200 for separating the stationary phase 100 into sections 100A and 100B (see Figure 3).

Figure 4C shows another embodiment. The separator 200 has been introduced into the housing 160, e.g. during an assembly or packaging process of the column. In case the outer diameter of the separator 200 is smaller or substantially equal to the inner diameter of the housing 160, the force coupling of the separator 200 with the housing 160 can be increased by exerting a force onto the region of the housing 160 where the separator 200 is located. Adequate tools and methods as well-known in the art can be applied in order to reduce the inner diameter of the housing 160 in the region where the separator 200 abuts.

In another embodiment (not shown in the figures), wherein the housing 160 is at least partly provided as a tube, the diameter of the tube at least in a region of the location of the separator 200 is tapered (e.g. cone shaped) in downstream direction, so that the separator 200 is also form-fitted with the housing 160 in a similar way as shown with respect to Figure 4B.

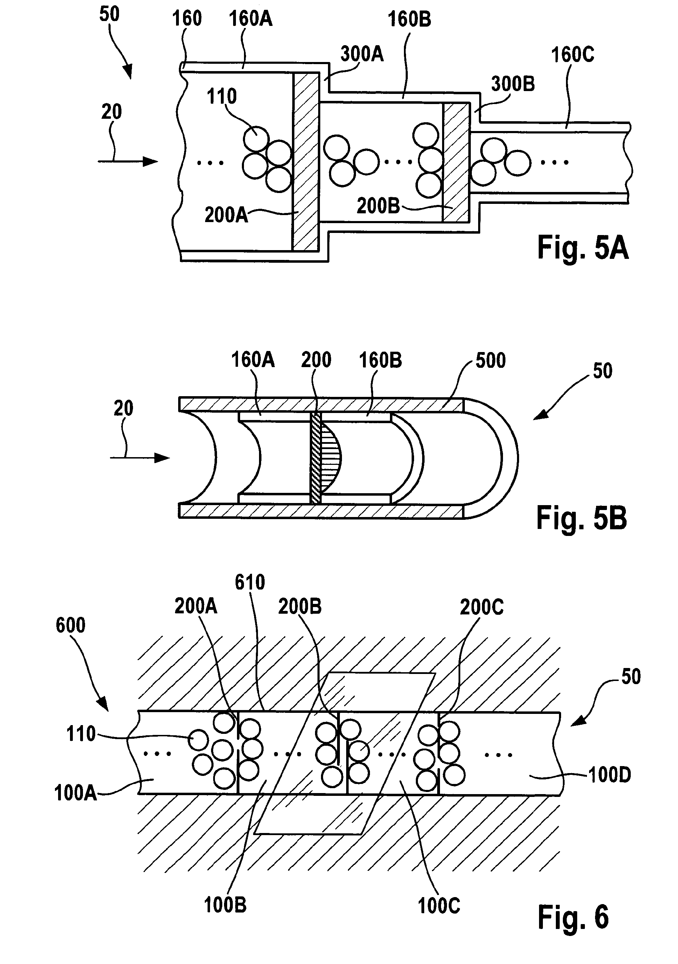

Figure 5A shows an embodiment wherein the housing 160 provides regions of smaller diameters in the direction of the downstream flow. In the example of Figure 5A, the housing 160 has a section 160A and a section 160B (located downstream with respect to section 160A). A first separator 200A abuts to a transition area 300A between the housing sections 160A and 160B. Accordingly a second separator 200B abuts to a transition area 300B between the housing section 160B, and a further section 160C with lower diameter is located further downstream (with respect to the directional flow of the mobile phase 20). The differences between the diameters of the housing sections 160A, 160B, 160C are preferably kept as small as possible in order to limit flow disturbance..

In the embodiment of Figure 5B, the separator 200 is form-fitted between two housing sections 160A and 160B. The outer diameter of the separator 200 is larger than the inner diameter at least of the housing section 160B located downstream. In the example of Figure 5B, both housing sections 160A and 160B are embodied as tubes and separator 200 is embodied as a disc located between the housing sections 160A and 160B. In order to provide a fluid tight sealing of the column 50, the housing sections 160A and 160B together with the separator 200 might be introduced into an outer tube 500, which might also be force coupled with the separator 200.

Figure 6 shows an embodiment of the column 50 provided as a microfluidic application. The particles 110 are introduced into a channel 600. In this example the column 50 comprises four sections 100A, 100B, 100C and 100D of the stationary phase 100. The separators 200 are provided by the same material as wherein the channel 600 has been formed into. Such material might be metal, silicon, glass, ceramic, plastic, or any other material suitable for micro-structuring techniques as known in the art.

In Figure 6, three different examples of embodiments of the separators 200 are shown. Separator 200A is provided by leaving a small opening between two or more "bars" extending from a wall 610 of the channel substantially in a direction perpendicular to the direction of flow. Separator 200B is provided by two or more bars with overlapping lengths but located closely together, so that a small opening between the parallel but overlapping bars is provided. Separator 200C is similar as separator 200A but provides a plurality of small openings with two opening shown in Figure 6.

The separators 200 are preferably provided as retaining elements in order to retain the particles 110 from moving through the separator 200 in downstream direction. Examples of embodiments of the separator 200 can be frit elements (as well-known in the art of column design), filter elements, or just a step in the surface reducing the channel height to smaller than or close to the particle size.

## Claims

1. A column device (50) comprising
a stationary phase (100) comprising a plurality of particles (110) adapted for interacting with a mobile phase (20) in order to separate different compounds of a sample fluid dissolved in the mobile phase (20)
a housing (160) for at least partly housing (160) the stationary phase (100), and
a separator (200) separating sections of the stationary phase (100) and being force-coupled with the housing (160).

2. The column device (50) of claim 1 or any one of the above claims, comprising at least one of:
the stationary phase (100) is located between an inlet (120) and an outlet (130) of the column device (50), at least one of the inlet (120) and the outlet (130) comprising a filter (140, 150) adapted for retaining particles (110) from passing through the filter,
each section of the stationary phase (100) comprises a plurality of particles (110), preferably individual particles (110),
the plurality of particles (110) are individual particles (110) packed together by application of force,
at least two sections of the stationary phase (100) comprise particles (110) acting chromatographically different from the particles (110) in the other section.

3. The column device (50) of claim 1 or any one of the above claims, comprising at least one of:
the separator is adapted for transmitting a force to the housing (160), wherein the force may result from the mobile phase (20) passing through the section of the stationary phase (100) upstream to the separator,
a plurality of separators each separating different sections of the stationary phase (100), wherein each separator is coupled with the housing (160) or another housing component(160A) at least partly housing the stationary phase (100),
the separator is abutting to the upstream section of the stationary phase (100),
the separator is abutting to the downstream section of the stationary phase (100),
the separator is at least partly permeable to the mobile phase (20),
the separator comprises at least one of a filter, a frit, a screen, a sieve, a composition of glass fibers, or a combination thereof,
the separator is provided from particles (110) of the stationary phase (100),
the separator is provided from particles (110) of the stationary phase (100) being coupled together by at least one of: force-coupling, gluing, heating, chemical reaction, condensation, esterification, decarboxylation, a clathrate process initialized by light and a monomeric additive,
the separator is at least partly elastically deformable on application of force,
the separator is at least partly bendable on application of force.

4. The column device (50) of claim 1 or any one of the above claims, comprising at least one of:
the housing (160) completely houses the stationary phase (100),
an inner surface of the housing (160) facing at least one of the stationary phase (100) and the separator comprises an area of defined surface roughness,
the separator is at least one of form-fitted and force-fitted to the housing (160),
the housing (160) comprises a section of reduced diameter for at least one of form-fitting and force-fitting the separator,
the separator is integrally formed at the housing (160),
the housing (160) comprises a tube,
the column device (50) comprises at least one fitting adapted for coupling the column device (50) into a fluid transport path for transporting the sample dissolved in the mobile phase (20).

5. The column device (50) of claim 1 or any one of the above claims, being part of a microfluidic device, such as a microfluidic chip, comprising a channel for transporting the mobile phase (20).

6. The column device (50) of claim 1 or any one of the above claims, comprising at least one of:
the mobile phase (20) is one of a fluid, a liquid, a supercritical liquid, and a mixture thereof,
the mobile phase (20) comprises at least one of a solvent and a sample fluid comprising different compounds,
the column device (50) is a chromatographic column,
the stationary phase (100) comprises at least one of porous and non-porous particles (110),
the stationary phase (100) comprises at least one of inorganic metal oxides, non metal oxides, pure Silica, any chemical modification of Silica, oxides of Zirconia, Titania, Alumina, graphitized carbon, organic polymers, Polystyrene, polyvinyl alcohols, metacrylates, and any other derivative,
the size of the particles (110) typically is in the range of 0.5 and 100 um,
the column device (50) is adapted to receive the mobile phase (20) at a pressure of 100bar and higher, preferably between 100 and 2000bar, more preferably between 200 and 1000bar.

7. A separation device or system (10) adapted for separating compounds of a mobile phase (20) and comprising a column device (50) of claim 1 or any one of the above claims, further comprising at least one of:
a driving unit (30), preferably a pump, adapted for driving the mobile phase (20) through the column device (50),
a sampling unit (40) adapted for introducing the sample fluid to the mobile phase (20),
a detector (60) adapted for detecting separated compounds of the mobile phase (20),
a fractionating unit (70) adapted for outputting separated compounds of the mobile phase (20).

8. A method of providing a column device (50) having a stationary phase (100), comprising a plurality of particles (110) adapted for interacting with a mobile phase (20) in order to separate different compounds of a sample fluid dissolved in the mobile phase (20) and a housing (160) for at least partly housing (160) the stationary phase (100), the method comprising:
force-coupling a separator with the housing (160), wherein the separator separates sections of the stationary phase (100).

9. The method of the above claim, wherein the force-coupling is provided by at least one of:
introducing the separator into the housing (160) and exerting a force onto the housing (160) in an area where the separator abuts the housing (160) in order to decrease the inner diameter of the housing (160) at least in the area of abutting;
applying an increased temperature at least in an area where the separator abuts the housing (160);
initiating a chemical reaction at least in an area where the separator abuts the housing (160).
